**Europäisches Patentamt**

**European Patent Office**

**Office européen des brevets**

(19)

(11) Veröffentlichungsnummer: **0 309 715 B1**

(12)

# EUROPÄISCHE PATENTSCHRIFT

(45) Veröffentlichungstag der Patentschrift:
29.05.91 Patentblatt 91/22

(51) Int. Cl.⁵: **B62D 1/26**

(21) Anmeldenummer: **88113344.1**

(22) Anmeldetag: **17.08.88**

(54) **Spurführbarer Omnibus.**

(30) Priorität: **02.10.87 DE 3733295**

(43) Veröffentlichungstag der Anmeldung:
**05.04.89 Patentblatt 89/14**

(45) Bekanntmachung des Hinweises auf die
Patenterteilung:
**29.05.91 Patentblatt 91/22**

(84) Benannte Vertragsstaaten:
**ES FR GB IT NL SE**

(56) Entgegenhaltungen:
**DE-A- 2 643 324**
**DE-A- 2 719 705**
**FR-A- 2 449 017**

(73) Patentinhaber: **DAIMLER-BENZ**
**AKTIENGESELLSCHAFT**
**Mercedesstrasse 136**
**W-7000 Stuttgart 60 (DE)**

(72) Erfinder: **von Scarpatetti, Diether**
**Schurwaldstrasse 36**
**W-7300 Esslingen (DE)**

## Beschreibung

Die Erfindung betrifft einen auf Sondertrassen spurführbaren Omnibus nach dem Oberbegriff von Anspruch 1, wie er beispielsweise aus der DE-A-26 43 324 als bekannt hervorgeht.

Bei spurführbaren Omnibussen mit Querführung durch beiderseits der Sondertrasse angebrachte Querführungsstege, die mit fahrzeugseitigen Querführungsrollen zusammenarbeiten, besteht in Kurven das Problem, die nachlaufenden Achsen spurtreu der vordersten spurgeführten Fahrzeugachse folgen zu lassen. Gemäß der eingangs zitierten Druckschrift wird hierzu die nachlaufende Fahrzeugachse drehschemelartig schwenkbar gehaltert ; außerdem werden jeder Fahrzeugseite der nachlaufenden Achse vorauslaufend und nachlaufend jeweils eine spurbestimmende Querführungsrolle zugeordnet. Es sind also insgesamt je nachlaufender Achse vier Querführungsrollen vorgesehen, die mit den trassenseitigen Querführungsstegen ständig in Kontakt liegen. Dadurch wird der schwenkbaren nachlaufenden Achse die Richtung der spurbestimmenden Querführungsstege zwangsweise aufgeprägt. Das Schwenkzentrum der in sich zwar unlenkbaren jedoch verschwenkbaren Fahrzeugachse ist durch Drehkranzsegmente und durch den Schnittpunkt eines Dreieckslenkerpaares mechanisch vorgegeben. Dieses Schwenkzentrum liegt mit Rücksicht auf einen gierschwingungsfreien Lauf der schwenkbaren Fahrzeugachse in Fahrtrichtung vor der Achsmitte. Um Brems- und Traktionsmomente während des Verschwenkens der Fahrzeugachse sicher auffangen zu können, sind die Längslenker längenveränderbar durch integrierte Kolben/Zylinder-Einheiten ausgebildet, wobei die Arbeitsräume dieser rechts und links angeordneten Kolben/Zylinder-Einheiten untereinander kurzgeschlossen sind. Dadurch ist zwar eine Verschwenkung der Achse möglich, nicht jedoch eine Verdrehung des Achskörpers in oder entgegen der Raddrehrichtung. Diese Kolben/Zylinder-Einheiten können gemeinsam mit einer drosselnd wirkenden Verbindung auch als Gierschwingungsbremse dienen. Mit Rücksicht darauf, daß die Räder der verschwenkbaren nachlaufenden Fahrzeugachse stets genau parallel zu den spurbestimmenden Querführungsstegen ausgerichtet werden, stimmt die Radebene der Fahrzeugräder stets mit der Fahrtrichtung über ein ; ein Schräglaufwinkel zwischen Radebene und Fahrtrichtung kann sich nicht aufbauen. Demgemäß müssen auftretende Querkräfte vollständig von den spurbestimmenden Querführungsrollen übernommen und in die Querführungsstege abgeleitet werden. Die Querführungsrollen sind daher dauernd und beim Auftreten von Querkräften sehr hoch belastet und müssen dementsprechend dimensioniert werden. Dieses wirft Platz- und Gewichtsprobleme auf. Auch ist die schwenkbare Führung der nachlaufenden Fahrzeugachse mittels Drehkranzsegmenten oder mittels eines vollständigen Drehkranzes sehr aufwendig und schwer. Mit Rücksicht auf die Achsbefestigung können dennoch maximal nach jeder Seite hin sieben Winkelgrade Schwenkweg zugelassen werden. Zwar können mit einem solchen Schwenkwinkel die meisten auftretenden Kurven spurtreu durchfahren werden ; jedoch kommen auch engere Kurven vor, die einen noch stärkeren Schwenkwinkel der nachlaufenden Fahrzeugachse erforderlich machen würden. Um auch solche Kurven behinderungsfrei durchfahren zu können, muß dort trassenseitig der kurveninnere Querführungssteg nach innen versetzt werden, so daß die nachlaufende Fahrzeugachse ins Kurveninnere versetzt nachlaufen kann. Nachteilig an dieser Art eines spurtreuen Nachlaufens der Fahrzeugachse innerhalb der spurbestimmenden Sondertrasse besteht in der teuren, aufwendigen und schweren Konstruktion der nachlaufenden Fahrzeugachse bzw. ihrer Aufhängung, die verschiedene betriebliche Nachteile nach sich zieht. Außerdem muß die schwenkbare Fahrzeugachse beim Übergang zu spurfreiem, handgelenktem Betrieb mit einer aufwendigen Querlagenverriegelung versehen sein, die die Schwenkbarkeit aufhebt. Dies verteuert und verkompliziert die Achskonstruktion um ein weiteres Maß.

Zwar hat man bei praktisch ausgeführten Omnibussen diesen Aufwand nicht getrieben, sondern es im Wesentlichen bei einer starr und unbeweglich gehalterten nachlaufenden Fahrzeugachse belassen ; stattdessen hat man der nachlaufenden Fahrzeugachse beiderseits jeweils eine sogenannte Drängelrolle zugeordnet, die die Seitenflanken der Fahrzeugräder nur geringfügig überragen, so daß sie normalerweise nicht mit den spurbestimmenden Querführungsstegen in Kontakt gelangen, sondern lediglich in Kurven. Durch diese Drängelrollen wird beim Durchfahren von Kurven das Fahrzeug gewaltsam in Richtung zum Kurvenäußeren hin gedrängelt, so daß die nachlaufende Fahrzeugachse auch ohne Verschwenkung der spurbestimmenden Trasse folgen kann. Bei langsamen Durchfahren einer Kurve, wo nahezu keine Fliehkräfte auftreten, hat die nachlaufende Fahrzeugachse die Tendenz, ins Kurveninnere versetzt nachzulaufen ;

Bei langsamer Kurvenfahrt ist also die kurveninnere Drängelrolle belastet, und zwar umso stärker, je enger die Kurve ist. Mit zunehmender Fahrgeschwindigkeit in Kurven tritt ein Fliehkrafteinfluß auf, der das Fahrzeug ins Kurvenäußere abzudrängen trachtet. Dies bringt bei mäßigen Fahrgeschwindigkeiten eine Entlastung der kurveninneren Drängelrolle. Bei geeigneter Geschwindigkeit kann ein Zustand eintreten, bei dem beim Durchfahren der Kurve die nachlaufende Fahrzeugachse auch ohne Anliegen der Drängelrolle spurtreu zwischen den spurbestimmenden Querführungsstegen hindurch rollt. Bei diesem Fahrzustand heben sich nach außen gerichteter Fliehkrafteinfluß und nach innen gerichtete Tendenz zum Seitenversetzen der nachlaufenden Fahrzeugachse gerade gegenseitig auf. Beim noch schnelleren Durchfahren einer Kurve kann der Fliehkrafteinfluß überwiegen, so daß in einem solchen Zustand die kurvenäußere Drängelrolle sich an den zugehörigen Querführungssteg anlegt und je nach Ausmaß der Fahrgeschwindigkeit und dementsprechender Fliehkraft mehr oder weniger stark belastet wird. In der Praxis kann dieser Fahrzustand auftreten, wenn die bestehenden spurbestimmenden Trassen mit relativ hoher Fahrgeschwindigkeit durchfahren werden. Bei Fahrzeugen, die keine Drängelrollen an den nachlaufenden Fahrzeugachsen haben, legt sich die Außenflanke der Fahrzeugräder an den spurbestimmenden Querführungssteg an, so daß der Reifen an der Seitenflanke in relativ kurzer Zeit aufgescheuert wird. Zwar ist es möglich, auch ohne Drängelrollen an den nachlaufenden Fahrzeugachsen berührungsfrei durch eine spurbestimmende Trasse hindurch zu fahren, jedoch muß dabei ein ganz bestimmter Geschwindigkeitsbereich eingehalten werden, der zum einen vom Krümmungsradius der Kurve zum anderen vom Überhöhungsgrad, also von der Querneigung der Fahrbahn im Kurvenbereich abhängt. Beides zusammen bestimmt die sogenannte Auslegungsgeschwindigkeit einer Kurve. Erfahrungen haben nun gezeigt, daß der Geschwindigkeitsbereich, mit dem eine Kurve berührungsfrei mit der nachlaufenden Fahrzeugachse spurtreu durchfahren werden kann, umso kleiner wird, je größer die Auslegungsgeschwindigkeit der Kurve ist. In solchen Fällen führen bereits geringfügige Überschreitungen der Auslegungsgeschwindigkeit zu einem außenseitigen Anscheuern der Reifen bzw. zu einem außenseitigen Anlegen der Drängelrolle. Bei zu langsamem Durchfahren scheuert der kurveninnere Reifen seitlich an bzw. legt sich die kurveninnere Drängelrolle an den Querführungssteg an. Zwar läßt sich – wie gesagt – das Anscheuern der Reifenflanken an dem Querführungssteg durch Einbau von Drängelrollen vermeiden, jedoch sind auch diese nicht unproblematisch, da sie häufig aus Platzgründen nicht untergebracht werden können und da sie, wenn sie nur klein sind, nur gering oder nur kurzzeitig belastbar sind. Bei länger andauernder höherer Belastung verschleißen die Drängelrollen relativ schnell, insbesondere dann, wenn sie in klimatisch heißen Umgebungen zum Einsatz gelangen und aufgrund von Wärmeaufnahme aus den durch Sonneneinstrahlung stark aufgeheizten Querführungsstegen und aufgrund einer Eigenaufheizung durch Walkarbeit im Reifenbelag der Drängelrolle sich unzulässig stark erhitzen können.

Aufgabe der Erfindung ist es, einen spurführbaren Omnibus zu schaffen, der einfach im Aufbau im Bereich der nachlaufenden Fahrzeugachse ist und der auch ohne Drängelrollen innerhalb eines relativ breiten Geschwindigkeitsbereiches um die Auslegungsgeschwindigkeit herum einer Kurve berührungsfrei mit der nachlaufenden Fahrzeugachse durch die Sondertrasse hindurchfahren kann.

Zur Lösung dieser Aufgabe geht die Erfindung von dem gattungsmäßig zugrundegelegten Omnibus aus und schlägt erfindungsgemäß die kennzeichnenden Merkmale von Anspruch 1 vor. Es handelt sich im Prinzip dabei um einen Omnibus mit konventionell mit dem Fahrzeugaufbau verbundener nachlaufender Fahrzeugachse, bei der die sonst schon immer vorhandenen Elemente der Achsaufhängung lediglich selbst modifiziert und/oder modifiziert eingebaut sind. Soweit ein zusätzlicher konstruktiver Aufwand nötig ist, ist dieser nur sehr gering und benötigt kaum mehr Platz oder Gewicht. Die verbesserte Spurhaltung der nachlaufenden Fahrzeugachse über einen größeren Geschwindigkeitsbereich um die Auslegungsgeschwindigkeit einer Kurve herum ist dadurch möglich, daß sich ein höherer Schräglaufwinkel zwischen Radebene und Fahrtrichtung selbsttätig und querkraftabhängig einstellen kann. Dieser durch die Schwenkbarkeit der nachlaufenden Fahrzeugachse gegebene Schwenkwinkel kommt zu dem sich selbsttätig ohnehin schon einstellenden Schräglaufwinkel hinzu. Auch bei starrer Hinterachse besteht, wenn das Fahrzeug mit Auslegungsgeschwindigkeit spurtreu und berührungsfrei durch die Kurve einer spurbestimmenden Trasse hindurchfährt, ein Schräglaufwinkel zwischen Radebene und Fahrtrichtung, aufgrund dessen die Fahrzeugräder fliehkraftbedingte Querkraft aufnehmen bzw. in die Fahrbahn übertragen können. Dank der erfindungsgemäßen Schwenkbarkeit wird dieser Schräglaufwinkel um den Winkelraum der Schwenkbarkeit der nachlaufenden Fahrzeugachse erhöht, so daß die nachlaufende Fahrzeugachse in Querrichtung vermehrt belastbar ist. Insbesondere ist der Geschwindigkeitsbereich, mit dem eine Kurve berührungsfrei und spurtreu durchfahren werden kann, wesentlich verbreitert worden. Ein Seitenkontakt der sicherheitshalber empfehlenswerten Drängelrollen kann daher auf wenige Extremfälle beschränkt werden in denen eine vorübergehende Belastung der Drängelrollen zumutbar ist.

Zweckmäßige Ausgestaltungen der Erfindung können den Unteransprüchen entnommen werden. Im übrigen ist die Erfindung anhand zweier in den Zeichnungen dargestellter Ausführungsbeispiele nachfolgend noch erläutert ; dabei zeigen :

Figur 1 eine Grundrißdarstellung eines spurführbaren Omnibusses auf einer spurbestimmenden Sondertrasse,

Figur 2 den Heckbereich des Omnibusses nach Figur 1 in vergrößerter Darstellung, ebenfalls im Grundriß, die erfindungsgemäße Schwenkbarkeit zeigend,

Figur 3 eine Seitenansicht der Heckpartie des Omnibusses,

Figur 4 eine Einzeldarstellung der Dreieckslenker eines modifizierten Ausführungsbeispieles einer schwenkbaren Anordnung der nachlaufenden Fahrzeugachse und

Figur 5 eine Einzeldarstellung der Kolben/Zylinder-Einheit eines der Dreieckslenker aus Figur 4.

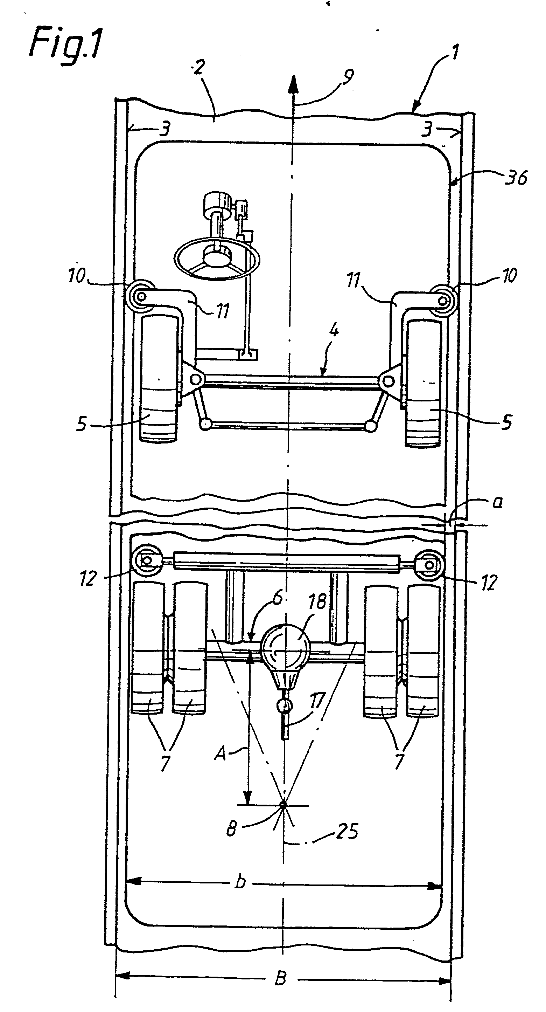

Die Figur 1 zeigt den spurführbaren Omnibus 36 auf einer spurgebenden Sondertrasse 1, bei der beiderseits der Fahrbahnoberfläche 2 spurbestimmende Querführungsstege 3 angebracht sind. Die lichte Weite zwischen diesen beiden gegenüberliegenden Querführungsstegen – Maß B – ist insgesamt etwa 10 cm größer als die Gesamtbreite b des Omnibusses 36.

Es handelt sich bei dem dargestellten Omnibus um einen solchen, der wahlweise spurführbar auf der gezeigten Sondertrasse als auch spurfrei mittels Handlenkung auf normalen Straßen eingesetzt werden kann. Die vordere Fahrzeugachse 4 ist manuell lenkbar ; jedem der vorderen Fahrzeugräder 5 ist jeweils vorauslaufend eine in Fahrtrichtung 9 vorauslaufend gehalterte Querführungsrolle 10 zugeordnet ; der Über-Alles-Abstand der gegenüberliegenden Querführungsrollen 10 ist geringfügig größer als die lichte Weite B zwischen den gegenüberliegenden Querführungsstegen 3, so daß die Querführungsrollen 10 unter leichter Vorspannung an den jeweiligen Querführungsstegen 3 anliegen. Die Querführungsrollen 10 sind über einen Tragarm 11 den jeweiligen Fahrzeugrädern 5 relativ unbeweglich zugeordnet ; sie machen also die Einschlagbewegung der lenkbaren Fahrzeugräder 5 mit ; umgekehrt wird den einschlagbaren Fahrzeugrädern 5 bei spurgeführten Betrieb die Fahrtrichtung durch die Querführungsstege bzw. die Querführungsrollen aufgeprägt. Die Querführungsrollen 10 sind lediglich durch Lenkkräfte, nicht jedoch durch fliehkraftbedingte oder durch Seitenwind verursachte Querkräfte belastet. Die lenkbaren Fahrzeugräder 5 können sich schräg zur Fahrtrichtung, d.h. schräg zu den spurbestimmenden Querführungsstegen 3 einstellen, so daß sich eine Querkraft zwischen Aufstandsfläche des Reifens und der Fahrbahnoberläche 2 aufbauen kann.

Im hinteren Bereich des Omnibusses 36 ist eine nachlaufende in sich unlenkbare Fahrzeugachse 6 angebracht, die wegen der höheren Vertikalbelastung Zwillingsräder 7 trägt. Der Achskörper 15 dieser nachlaufenden Fahrzeugachse 6 ist um eine Hochachse 8 schwenkbar, die erfindugnsgemäß in Fahrtrichtung 9 hinter der nachlaufenden Fahrzeugachse 6 liegt. Beim dargestellten Ausführungsbeispiel ist der Omnibus 36 lediglich als einzelliger Omnibus mit insgesamt zwei Fahrzeugachsen gezeigt, so daß die nachlaufende Fahrzeugachse 6 die Hinterachse ist ; sie ist von einem im Heckbereich angeordneten Motor 16 über eine Gelenkwelle 17 und ein Differentialgetriebe 18 angetrieben. Die nachfolgende Beschreibung gilt nicht nur für die Hinterachse eines einzelligen Omnibusses, sondern für jede der nachlaufenden Fahrzeugachsen auch von mehrzelligen Gelenkomnibussen. Üblicherweise ist bei Gelenkbussen die nachlaufende Fahrzeugachse des Vorderwagens nicht angetrieben ; lediglich die nachlaufende Fahrzeugachse des Nachläuferwagens ist angtrieben.

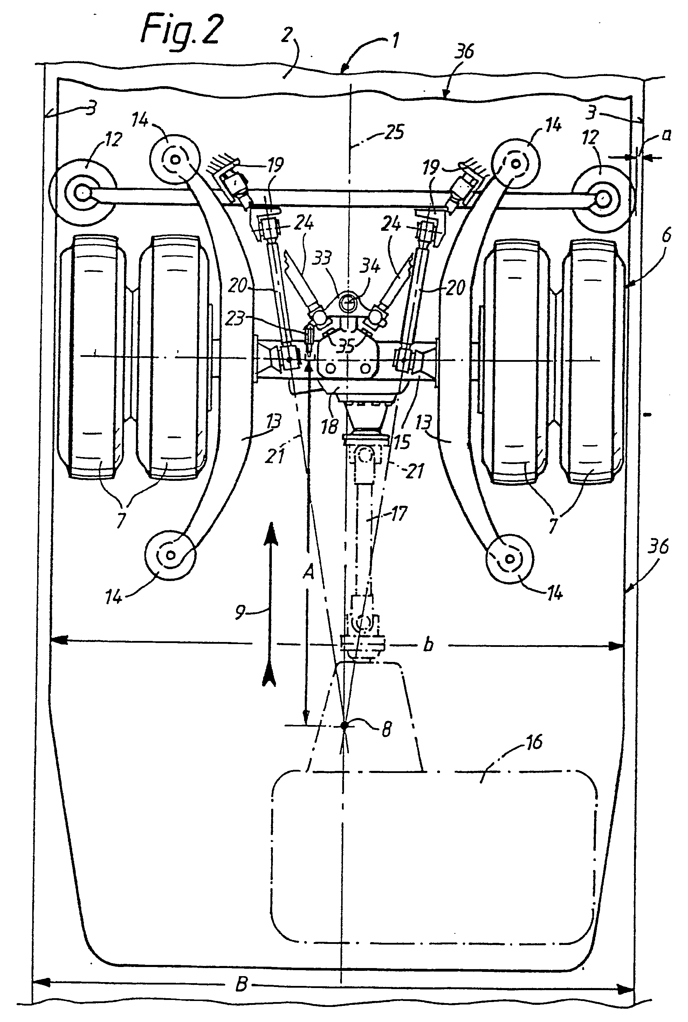

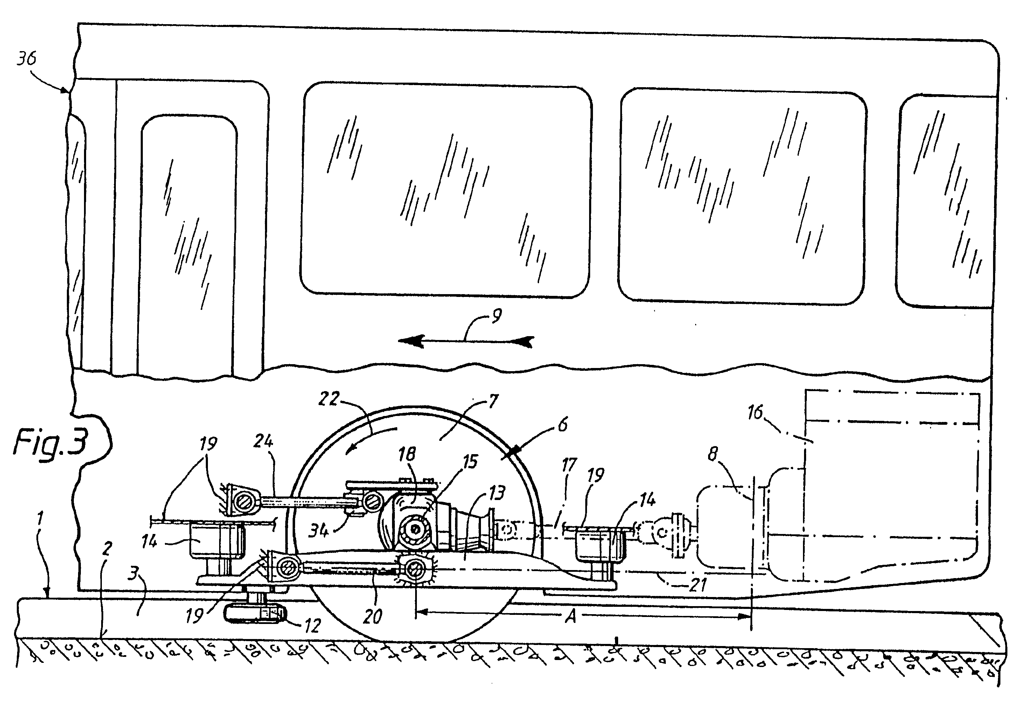

Die in sich unlenkbare nachlaufende Fahrzeugachse 6 ist rechts und links mit sich im wesentlichen in Fahrtrichtung erstreckenden Federträger 13 verbunden, an deren vorderen und hinteren Enden Luftfederbälge 14 angebracht sind über die sich der Fahrzeugaufbau 19 des Omnibusses 36 in Schwerkraftrichtung abstützt. Wie die Figuren 2 und 3 zeigen, ist der Achskörper 15 der nachlaufenden Fahrzeugachse 6 in Längsrichtung durch zwei Längslenker 20 festgelegt, die rechts und links von der Fahrzeugmitte an den Federträgern 13, also unterhalb des Achskörpers 15 angreifen. Die Längslenker liegen im wesentlichen parallel zur Fahrzeuglängsrichtung ; auf ihre leichte trapezförmige Neigung soll weiter unten näher eingegangen werden. Oberhalb des Achskörpers 15 greift ein weiteres Paar von Lenkerstangen 24 an, die im Grundriß dreieckförmig und symmetrisch zur Fahrzeugmittellinie 25 angeordnet sind. Sie legen die Querposition der nachlaufenden Fahrzeugachse 6 fest ; außerdem verhindern sie gemeinsam mit den Längslenkern 20 eine Verdrehung der Fahrzeugachse 6 in Raddrehrichtung 22 (beim Bremsen) bzw. entgegen dieser Drehrichtung (beim Beschleunigen).

Anstelle einer dreieckförmigen Anordnung der Lenkerstangen 24 könnte diese Aufgabe auch durch einen einzelnen mittig angeordneten Längslenker im Bereich der Oberseite des Differentialgetriebes 18 und durch einen einzelnen Querlenker erfüllt werden. Der Vollständigkeit halber sei noch erwähnt, daß in der Seitendarstellung nach Figur 3 die Gelenke der unteren Längslenker 20 und der oberen Lenkerstangen 24 in Fahrzeuglängsrichtung annähernd einen gleichen Abstand aufweisen, so daß die Längslenker 20 und die Lenkerstangen 24 gemeinsam mit dem Achskörper 15 in Seitenansicht ein Gelenkparallelogramm bilden ; dadurch wird die nachlaufende Fahrzeugachse 6 beim Einfedern im wesentlichen parallel geführt, d.h. es werden hier einfederungsbedingt keine Drehschwingungen überlagert. Letzteres wäre mit Rücksicht auf die Gelenkwelle 17 und auch während des Bremsens schädlich.

Um mit der nachlaufenden Fahrzeugachse spurtreu innerhalb eines relativ breiten Geschwindigkeitsbereiches durch gekurvte Bereiche der Sondertrasse hindurchfahren zu können, ohne daß es zu einen Seitenkontakt der Räder 7 oder der Drängelrolle 12 mit den Querführungsstegen kommt, ist die nachlaufende, in sich unlenkbare Fahrzeugachse 6 um eine in Fahrtrichtung hinter der Achse 6 liegende Hochachse 8 verschwenkbar. Die Fahrzeugachse 6 selber ist hinsichtlich einer Verschwenkung sich völlig selbst überlassen, weist also keinerlei gesonderte Spurführungsmittel auf, die etwa – berührend oder berührungsfrei – mit trassenseitigen Spurführungsmittel in Wirkzusammenhang stünden. Und zwar ist die nachlaufende Fahrzeugachse 6 etwa um ± 0,8...1,5 Winkelgrade um die exakte Querlage herum elastokinematisch der Richtung der Querkraft entgegen selbstlenkend ausgebildet. Zu diesem Zweck ist zum einen die Anlenkung der dreieckförmig angeordneten Lenkerstangen 24, die den Achskörper 15 in Querrichtung festhalten, derart ausgebildet, daß der Achskörper 15 querkraftabhängig begrenzt um etwa ± 0,8...1,2% der Fahrzeugbreite b aus der Mittenlage heraus unter zunehmender Kraft querverschiebbar ist. Dank dieser begrenzten Querverschiebbarkeit der nachlaufenden Fahrzeugachse gegenüber dem Fahrzeugaufbau 19 kann sie um das in Fahrtrichtung 9 hinter der Achsmitte liegende Schwenkzentrum – Hochachse 8 – schwenken. Durch die rückwärtige Verlagerung der Hochachse kommt der der Querkraftwirkung entgegengerichtete Lenkeffekt zustande. Die Lage der Hochachse 8 als virtuelles Schwenkzentrum wird dadurch bestimmt, daß die Längslenker 20 im Grundriß zur Mittellinie 25 symmetrisch geneigt, also trapezförmig angeordnet sind. Der Schnittpunkt der kinematisch wirksamen Mittellinien 21 der Längslenker, der die Lage der Hochachse 8 bestimmt, liegt etwa 50...75% der Fahrzeugbreite b hinter der Mitte der Fahrzeugachse 6 – Maß A. Um bei der dreieckförmigen Anordnung der Lenkerstangen 24 eine begrenzte Querverschiebbarkeit der Fahrzeugachse 6 bzw. ihres Achskörpers 15 gegenüber dem Fahrzeugaufbau 19 zu ermöglichen, sind bei dem Ausführungsbeispiel nach Figur 2 die beiden Lenkerstangen 24 an ihren einander und dem Achskörper 15 zugekehrten Enden über eine Schwinge 33 gelenkig miteinander verbunden ; sie bilden gemeinsam mit der Schwinge 33 ein trapezförmiges ebenes und symmetrisches Gelenkviereck. Die Schwinge 33 ihrerseits ist über ein mittig an ihr angeordnetes Gelenk mit dem Achskörper 15 verbunden. Außerdem ist das Gelenk 34 gegenüber den Gelenken zwischen der Schwinge 33 und den Lenkerstangen 24 in Fahrtrichtung 9 nach vorne verlegt. Dadurch kommt eine gewisse Geradführung des Gelenkes 34 bei Schwingenbewegung zustande. Die Mitte der Schwinge 33 bewegt sich annähernd auf einer quer zur Fahrzeugmittellinie 25 ligenden Linie. Um eine Begrenzung der Querverschiebbarkeit des Achskörpers 15 gegenüber dem Fahrzeugaufbau 19 zu bekommen, wird der Bewegungsspielraum des oben erwähnten trapetsförmigen Gelenkviereckes begrenzt. Und zwar sind zu diesem Zweck am Achskörper 15 symmetrisch Anschlagpuffer 35 angebracht, die jeweils mit der Stirnseite einer der zugehörigen Lenkerstangen 24 des Dreiecklenkerpaares zusammenwirken. Um bei üblicher Geradeausfahrt des Omnibusses 36 die nachlaufende Fahrzeugachse 6 trotz der begrenzten Querbeweglichkeit in der exakten Mittenlage zu halten, ist die bereits angesprochene elastische Mittenzentrierung der Fahrzeugachse 6 innerhalb des Querbewegungsbereiches vorgesehen. Beim dargestellten Ausführungsbeispiel ist diese dadurch realisiert, daß die Schwenklager an der Schwinge, z.B. das mittlere Gelenk 34 zwischen der Schwinge 33 und dem Achskörper 15, vorzugsweise aber auch die beiden Gelenke zwischen der Schwinge 33 und den angrenzenden Lenkerstangen 24 als Gummi/Metall-Lager ausgebildet sind. eine im Bewegungsspalt zwischen Lagerzapfen und Lagerbuchse beidseitig festhaftend angebrachte relativ dicke zylindrische oder kugelförmige Gummizwischenlage wird bei Bewegung des Gelenkes auf Schub beansprucht. Diese Gummizwischenlage erzeugt ein Rückstellmoment und wirkt als Zentrierfeder. Diese Zentrierfedern bewirken nicht nur eine Mittenzentrierung der Fahrzeugachse 6 bei querkraftfreier Fahrt, sondern es kommt bei Fahrt unter Querkrafteinwirkung auch eine Gleichgewichtslage innerhalb des Querverschiebungsbereiches zustande, so daß querkraftabhängig eine mehr oder weniger starke Auslenkung der Fahrzeugachse 6 aus der Mittellage und dementsprechend auch eine mehr oder weniger starke Verschwenkung von ihr, der Richtung der Querkraftwirkung entgegen, zustandekommt. Dieser elastokinematische, selbsttätig wirksam werdende Lenkeffekt kommt insbesondere auch ohne gesonderte trassenseitig eingreifende Spurführungsmittel, insbesondere auch ohne ein Anlegen der Drängelrolle 12 an einen der Querführungsstege 3 zustande. Die Drängelrolle steht zwar gegenüber der außenliegenden Seitenflanke des Fahrzeugrades 7 geringfügig nach außen über, jedoch ist sie in Relation zur Querlage der spurbestimmenden Oberfläche des Querführungssteges 3 deutlich zurückversetzt, so daß ein gewisser Freiraum a entsteht. Die Drängelrolle 12 ist also für eine elastokinematische Selbstlenkung der nachlaufenden Fahrzeugachse 6 nicht wirksam, auch wenn eine Drängelrolle 12 an der Fahrzeugachse 6 angebracht ist. Lediglich bei extremer Über- bzw. Unterschreitung des dank der Erfindung verbreiterten Geschwindigkeitsbereiches, innerhalb dessen eine Kurve der spurgebenden Sondertrasse durchfahren werden kann, wird der Omnibus auf der Fahrbahnoberfläche 2 so weit nach der einen bzw. anderen Richtung abgedrängt, daß die Drängelrolle 12 sich an den entsprechenden Querführungssteg 3 anlegt. Dank des elastokinematischen Selbstlenkeffektes der nachlaufenden Fahrzeugachse ist jedoch die Belastung der Drängelrolle, selbst bei starker Abweichung von der Auslegungsgeschwindigkeit beim Durchfahren von Kurven, nur relativ mäßig, weil sich durch Ausnützung des elastokinematischen Selbstlenkeffektes bereits ein beträchtlicher Anteil der auftretenden Querkraft hat abbauen lassen. Die Drängelrollen 12 dienen daher lediglich als äußerste Sicherheitsmaßnahme. Um noch einen zusätzlichen Lenkeffekt in der angestrebten Richtung zu bekommen, sind sie der nachlaufenden Fahrzeugachse 6 in Fahrtrichtung 9 vorauslaufend angeordnet. Auch bei Erschöpfung des elastokinematischen Lenkbereiches ergibt sich dank der elastischen Aus bildung der Schwenklager an den Lenkerstangen 24 bzw. an den Längslenkern 20 eine kleine zusätzliche Bewegungsmöglichkeit innerhalb der Längselastizität der Lenkerstangenanlenkung.

Um die bewußt schwenkbar geführte nachlaufende Fahrzeugachse am Aufbau einer Gierschwingung zu hindern, ist an geeigneter Stelle eine Gierschwingungsbremse 23 vorgesehen. Beim Ausführungsbeispiel nach Figur 2 ist diese dadurch realisiert, daß die Schwinge 33 an einem Ende über das lenkerstangenseitige Gelenk hinaus verlängert und dort mit einem hydraulischen Stoßdämpfer gekoppelt ist, der die Funktion der Gierschwingungsbremse 23 übernimmt. Beim Auftreten von Gierschwingungen der nachlaufenden Fahrzeugachse 6 führt die Schwinge 33 ebenfalls Gierschwingungen innerhalb eines noch größeren Winkels als die Schwingungsausschläge der nachlaufenden Fahrzeugachse 6 aus. Aus diesem Grunde ist es zweckmäßiger, die Gierschwingungen an der Schwinge 33 zu dämpfen, als am Achskörper 15 der nachlaufenden Fahrzeugachse. Das von der Schwinge 33 abgewandte Ende des hydraulischen Stoßdämpfers kann auch am Aufbau 19 des Omnibus 36 befestigt und nicht am Achskörper 15, weil beim Auftreten von Gierschwingungen der Fahrzeugachse 6 die Schwingungsausschläge der Schwinge 33 gegenüber dem Fahrzeugaufbau größer sind als die entsprechenden Schwingungsausschläge gegenüber dem Achskörper 15. Bei der aufbauseitigen Festlegung des hydraulischen Stoßdämpfers können also Gierschwingungen der Schwinge 33 und somit Gierschwingungen der Fahrzeugachse 6 wirksamer gedämpft werden. An sich wäre es denkbar, an beiden Enden der Schwinge 33 in der gezeigten Weise Stoßdämpfer anzulenken, was den Vorteil einer gewissen Redundanz hätte. Nachdem jedoch Stoßdämpfer ein heute unproblematisches Bauteil sind, tritt der Gedanke einer Redundanz gegenüber gewichtsmäßigen Überlegungen in den Hintergrund ; ein flächenmäßig doppelt so großer Stoßdämpfer ist nur unwesentlich größer und schwerer als zwei flächenmäßig einfache Stoßdämpfer ; außerdem entfallen entsprechende Anlenkaugen und Montagevorgänge.

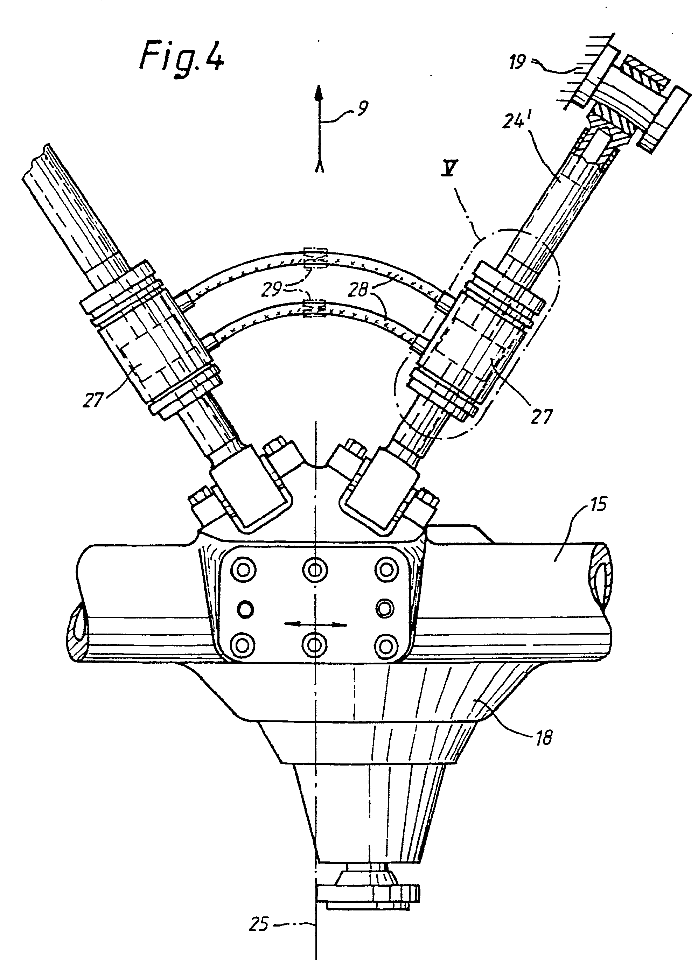

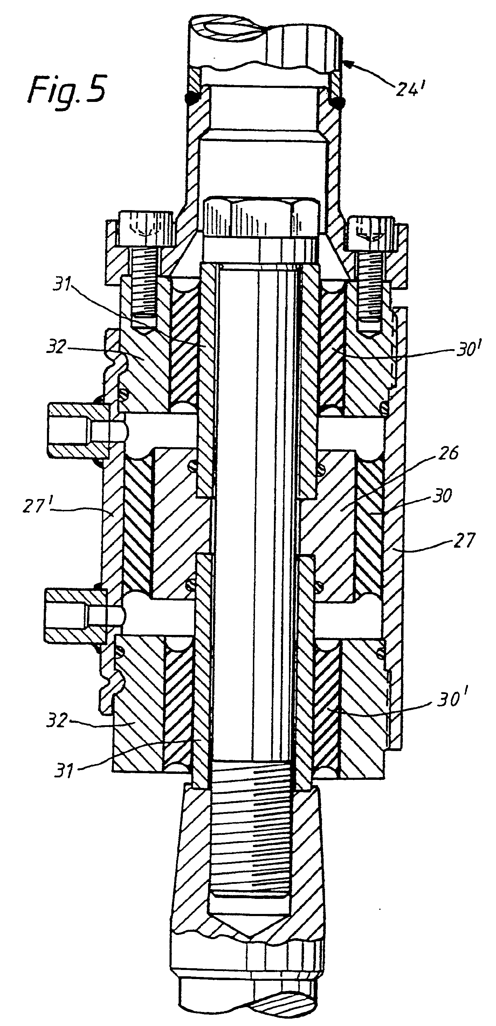

Bei üblichen Omnibussen mit obenliegendem Dreiecklenkerpaar sind die achsseitigen Anlenkpunkte der Lenkerstangen 24 dem Achskörper 15 starr zugeordnet ; diese Anlenkpunkte sind beim Ausführungsbeispiel nach Figur 2 – wie gesagt – über die Schwinge 33 dem Achskörper 15 beweglich zugeordnet. Dies setzt allerdings eine Änderung im Anlenkbereich der Lenkerstangen 24 am Achskörper 15 gegenüber der herkömmlichen Ausbildung voraus. Beim Ausführungsbeispiel nach den Figuren 4 und 5 ist dieser Änderungsumfang vollkommen in die Lenkerstangen 24' hinein verlagert, so daß die Anlenkstellen auch im Bereich des Achskörpers 15 gegenüber einer herkömmlichen Omnibusausbildung unverändert bleiben können. Bei dem Ausführungsbeispiel nach den Figuren 4 und 5 wird die begrenzte Querverschiebbarkeit des Achskörpers 15 der nachlaufenden Fahrzeugachse 6 gegenüber dem Fahrzeugaufbau durch eine begrenzte Teleskopierbarkeit der Lenkerstangen 24' erreicht. Bei einer Querverlagerung des Achskörpers 15 gegenüber der Fahrzeugmittellinie 25 wird – unter leichter Neigungsveränderung – die eine Lenkerstange 24' verkürzt und die andere dementsprechend verlängert. Beim dargestellten Ausführungsbeispiel sind die teleskopierbar ausgebildeten Lenkerstangen 24' mit einer Kolben/Zylindereinheit bestehend aus Kolben 26 und Zylinder 27 baulich integriert, wobei diese Kolben/Zylinder- Einheit als hydraulischer Gierschwingungsdämpfer dient. Dadurch kann auch eine gesonderte, am Achskörper 15 der nachlaufenden Fahrzeugachse 6 angreifende Gierschwingungsbremse entfallen, so daß ein auch in soweit notwendiger Änderungsumfang mit in die Lenkerstangen 24' hineinverlagert ist.

Ein besonders vorteilhaftes Ausführungsbeispiel einer geeigneten Kolben/Zylinder-Einheit ist in Figur 5 vergrößert dargestellt. Die Besonderheit dieses Ausführungsbeispieles besteht darin, daß die Kolbenstangendurchführungen im Zylinderdeckel 32 und der Kolben 26 jeweils als rotationssymmetrische Gummi/Metall-Hülse ausgebildet sind, die eine funktionelle Verschmelzung einer Abdichtung und einer elastischen Mittenzentrierung der Kolben/Zylinder–Einheit wirken. Überdies sind in der linken und rechten Bildhälfte von Figur 5 unterschiedliche Ausführungsvarianten für den Zylinder 27' bzw. 27 dargestellt. Diese beiden Ausführungsvarianten unterscheiden sich lediglich durch die Befestigung des Zylinders 27 bzw. 27' mit den zugehörigen Zylinderdeckeln. Während der rechts dargestellte Zylinder 27 mit den Zylinderdeckeln 32 verschraubt ist, ist die Befestigung des links dargestellten Zylinders 27' über eine eingeprägte Umfangsrollierung bewirkt. Der Zylinder 27 bzw. 27' steht mit dem Kolben 26 über eine allseitig festhaftend angebrachte ringförmige Gummizwischenlage in Verbindung, die als Gummifeder 30 dient und die gleichzeitig auch die Kolbenabdichtung innerhalb des Zylinders 27 bzw. 27' bewirkt. Eine genaue und glatte Bearbeitung des Kolbens und der Zylinderinnenwand ist dabei nicht erforderlich. In ähnlicher Weise sind die als Hülsen ausgebildeten Kolbenstangen 31 über eine ringförmige Gummizwischenlage mit den ebenfalls ringförmigen Zylinderdeckeln 32 verbunden ; die Gummizwischenlage ist an beiden Teilen 31 bzw. 32 festhaftend anvulkanisiert. Durch eine die hülsenförmigen Kolbenstangen 31 und den Kolben 26 durchsetzende Schraube sind alle drei Teile mit einem Anlenkauge der Lenkerstange 24' fest verbunden. Zur Begrenzung eines definierten Längshubes der teleskopierbaren Lenkerstange 24' bilden die Zylinderdeckel 32 und der Kolben 26 jeweils stirnseitige Anschläge. Die zwischen den Zylinderdeckeln und dem Kolben jeweils eingeschlossenen Arbeitsräume vergrößern bzw. verkleinern sich und verdrängen dementsprechend darin enthaltenes Flüssigkeitsvolumen. Nachdem bei einer Querverlagerung des Achskörpers 15 gegenüber dem Fahrzeugaufbau 19 der der Achse zugekehrt liegende Arbeitsraum der einen Lenkerstange sich vergrößert und der entsprechende Arbeitsraum der anderen Lenkerstange sich verkleinert, sind die beiden einander entsprechenden Arbeitsräume der gegenüberliegenden Lenkerstangen untereinander mittels einer Verbindungsleitung 28 verbunden ; das, was der eine Arbeitsraum verdrängt, nimmt der andere entsprechend auf. In gleicher Weise sind auch die beiden vom Achskörper 15 weiter entfernt liegenden Arbeitsräume ebenfalls mittels einer Verbindungsleitung 28 kurzgeschlossen. In die Verbindungsleitungen 28 sind Drosseln 29 eingebaut, so daß dem Verschieben des Kolbens 26 ein arbeitsverzehrender Widerstand entgegengesetzt ist. Aufgrund dieser Drosselwirkung können die Kolben/Zylinder-Einheiten die Funktion einer Gierschwingungsbremse übernehmen.

An sich wäre es auch möglich, die beiden vor und hinter dem Kolben 26 einer bestimmten Kolben/Zylinder-Einheit mit einer drosselnd wirksamen Kurzschlußleitung miteinander zu verbinden, um den Gierschwingungsdämpfenden Effekt zu erreichen. Mit Rücksicht darauf, daß den dreieckförmig angeordneten Lenkerstangen 24' zusätzlich die Aufgabe zukommt, den Achskörper 15 gegen Traktions- und Bremsmomente gemeinsam mit den Längslenkern 20 festzuhalten, dürfen bei gleichzeitiger Axialbeanspruchung beider Lenkerstangen 24' und beider Kolben/Zylinder-Einheiten die entsprechenden Kolben 26 sich nicht bewegen. Diese Wirkungsweise ist nur dann gewährleistet, wenn die Arbeitsräume der beiden Kolben/Zylinder-Einheiten in der in Figur 4 dargestellten Weise miteinander kurzgeschlossen sind. Bei gleichstarkem Axialdruck auf beide Kolben 26 können diese sich also nicht innerhalb des Zylinders 27 verschieben, weil die Drücke in den insgesamt vier Arbeitsräumen paarweise, nämlich bei den verbundenen Arbeitsraumpaaren, gleich groß sind.

Dank der lenkerstangen-integrierten Anordnung der Kolben/Zylinder-Einheit kann auf sehr einfache Weise eine Querlagen- bzw. Mittenlagenverriegelung des Achskörpers 15 vorgenommen werden, wenn dies gewünscht wird. Und zwar brauchen lediglich in den Verbindungsleitungen 28 Abschlußventile angeordnet zu werden. Diese Abschlußventile werden nach dem Übergang auf spurfreie Fahrt in einem Zustand, wenn das Fahrzeug sich querkraftfrei geradeausfahrend bewegt, verschlossen, wodurch die Lenkerstangen 24' ihre Telekopierbarkeit verlieren ; sie wirken dann lediglich als starre Verbindungsstangen. Allerdings wird durch eine solche Querlagenverriegelung der nachlaufenden Fahrzeugachse auch die elastokinematische Selbstlenkung dieser Fahrzeugachse aufgehoben ; auch beim spurfreien Einsatz ist diese elastokinematische Selbstlenkung durchaus vorteilhaft. Beispielsweise wird dadurch eine Seitenwindempfindlichkeit reduziert und auch ein spurtreuer Lauf in rasch durchfahrenen Kurven erzielt, was ebenfalls vorteilhaft ist.

**Ansprüche**

1. Auf Sondertrassen spurführbarer Omnibus,
– mit wenigstens einer in sich unlenkbaren Fahrzeugachse (6), die als ganzes um eine fahrzeugmittige, vertikalstehende, gegenüber der Mittellinie der Fahrzeugachse in Fahrzeuglängsrichtung versetzt angeordnete Hochachse (8) schwenkbar ist,
– ferner mit einem Paar von in Fahrzeuglängsrichtung liegenden Längslenkern (20), die rechts und links von der Fahrzeugmitte am Achskörper der in sich unlenkbaren Fahrzeugachse angelenkt sind,
– ferner mit weiteren, am Achskörper der in sich unlenkbaren Fahrzeugachse angelenkten Lenkerstangen (24), welche die in sich unlenkbare Fahrzeugachse in Querrichtung festhalten sowie
– gemeinsam mit den Längslenkern – eine Verdrehung dieser Fahrzeugachse in oder entgegen der Raddrehrichtung verhindern,
– ferner mit einer Gierschwingungen der in sich unlenkbaren Fahrzeugachse gegenüber dem Fahrzeugaufbau dämpfenden Gierschwinungsbremse, **dadurch gekennzeichnet,** daß
– die zwar verschwenkbare aber in sich unlenkbare Fahrzeugachse (6) hinsichtlich einer Verschwenkung sich völlig selbst überlassen, also ohne trassenseitig eingreifende Spurführungsmittel versehen ist und daß stattdessen ihre Aufhängung in Abhängigkeit von auftretenden Querkräften im Schwenkbereich von etwa ± 0,8...1,5 Winkelgraden um die exakte Querlage herum elastokinematisch der Richtung der Querkraft entgegen selbstlenkend ausgebildet ist, dadurch daß
– zum einen die Anlenkung der den Achskörper (15) der in sich unlenkbaren Fahrzeugachse (6) in Querrichtung festhaltenden Lenkerstange(n) (24, 24') derart ausgebildet ist, daß der Achskörper (15) querkraftabhängig begrenzt um etwa ± 0,8...1,2% der Fahrzeugbreite (b) aus der Mittellage heraus unter zunehmender Kraft querverschiebbar ist und dadurch, daß

– zum anderen die in ihrer Längsrichtung unnachgibigen Längslenker (20) – im Grundriß gesehen – derart zur Fahrzeuglängsrichtung (Mittellinie 25) symmetrisch geneigt, also trapezförmig angeordnet sind, daß der ein virtuelles Schwenkzetrum (Hochachse 8) darstellende Schnittpunkt der kinematisch wirksamen Mittellinien (21) der Längslenker (20) etwa 50...75% der Fahrzeugbreite (b) in Fahrtrichtung (9) hinter der Mitte der in sich unlenkbaren Fahrzeugachse (6) liegt (Maß A).

2. Omnibus nach Anspruch 1, **dadurch gekennzeichnet,** daß die begrenzte Querverschiebbarkeit der in sich unlenkbaren Fahrzeugachse (6) durch eine begrenzte Teleskopierbarkeit der betroffenen Lenkerstange(n) (24') bewirkt ist.

3. Omnibus nach Anspruch 2, **dadurch gekennzeichnet,** daß die teleskopierbare(n) Lenkerstange(n) (24') mit einer Kolben/Zylinder-Einheit (Kolben 26, Zylinder 27) baulich integriert ist, die ihrerseits als hydraulische Gierschwingungsbremse dient.

4. Omnibus nach Anspruch 3, **dadurch gekennzeichnet,** daß die Kolbenstangendurchführung (Zylinderdeckel 32) und der Kolben (26) der Kolben/Zylinder-Einheit (Kolben 26, Zylinder 27) jeweils als rotationssymmetrische Gummi/Metall-Hülse (Gummifeder 30, 30') ausgebildet sind, die eine funktionelle Verschmelzung einer Abdichtung und einer elastischen Mittenzentrierung der Kolben/Zylinder--Einheit (Kolben 26, Zylinder 27) bewirken.

5. Omnibus nach einem der Ansprüche 1 bis 4, **dadurch gekennzeichnet,** daß die die Fahrzeugachse (6) in Querrichtung festhaltenden und – gemeinsam mit den Längslenkern (20) – gegen Verdrehen in oder entgegen der Raddrehrichtung (22) sichernden Lenkerstangen (24) nach Art eines – im Grundriß – dreieckförmig liegenden Dreieckslenkerpaares angeordnet und an ihren einander und dem Achskörper (15) zugekehrten Enden über eine Schwinge (33) gelenkig miteinander verbunden sind und ein trapezförmiges ebenes Gelenkviereck bilden, und daß die Schwinge (33) über ein mittig an ihr angeordnetes Gelenk (34) mit dem Achskörper (15) verbunden ist.

6. Omnibus nach Anspruch 5, **dadurch gekennzeichnet,** daß am Achskörper (15) der in sich unlenkbaren Fahrzeugachse (6) jeweils ein mit der Stirnseite der zugehörigen Lenkerstange (24) des Dreiecklenkerpaares zusammenwirkender, den Weg der Querverschiebung begrenzender Anschlagpuffer (35) angebracht ist.

7. Omnibus nach Anspruch 5 oder 6, **dadurch gekennzeichnet,** daß die Schwenklager (Gelenk 34) an der Schwinge als Gummi/Metall-Lager ausgebildet sind, die eine elastische Mittenzentrierung der Schwinge (33) und mit ihre auch des Achskörpers (15) der in sich unlenkbaren Fahrzeugachse (6) bewirken.

8. Omnibus nach Anspruch 5, 6 oder 7, **dadurch gekennzeichnet,** daß die Schwinge (33) wenigstens einseitig über das lenkerstangenseitige Gelenk hinaus verlängert und dort mit einem als Gierschwingungsbremse (23) dienenden hydraulischen Stoßdämpfer gekoppelt ist.

9. Omnibus nach einem der Ansprüche 1 bis 8, **dadurch gekennzeichnet,** daß den beiderseitigen Fahrzeugrädern (7) der in sich unlenkbaren Fahrzeugachse (6) vorauslaufend jeweils eine am Achskörper (15) gehaltene Drängelrolle (12) zugeordnet ist, die zwar die zugehörigen Fahrzeugräder (7) jeweils nach außen geringfügig überragen, aber deren über die Fahrzeugbreite (b) hinweg gemessener gegenseitiger Über-Alles-Abstand deutlich geringer ist als der lichte Abstand (B) der gegenüberliegenden, trassenseitigen, spurbestimmenden Querführungsstege (3) (Freiraum a).

## Claims

1. An omnibus adapted to be tracked on special lines,

– with at least one vehicle axle (6) which is not in itself deflectable but which is as a whole pivotable about a vertically disposed axis (8) offset in respect of the central line through the vehicle axis in the longitudinal direction of the vehicle,

– furthermore with a pair of longitudinal control arms (20) disposed in the longitudinal direction of the vehicle and to the right and left of the vehicle centre and articulated on the axle body of the vehicle axle which is not in itself deflectable,

– and with further control rods (24) articulated on the axle body of the vehicle axle which is not in itself deflectable but which hold the in itself non-deflectable vehicle axle fast in a transverse direction and also – jointly with the longitudinal control rods – prevent this vehicle axle turning in or against the direction of wheel rotation,

– and also with a yawing brake for damping in respect of the vehicle superstructure the yawing of the in itself non-deflectable vehicle axle, characterised in that

– the indeed pivotable but in itself non-deflectable vehicle axle (6) is itself given over entirely to pivoting and therefore has no track guidance means which engage the lines and in that, instead, depending upon transverse forces which occur, its suspension is constructed to be self-controlling elastokinematically against the direction of the transverse force in a pivoting range of about ± 0.8...1.5° about the exact transverse position, and in that

– on the one hand, the articulation of the control rods (24, 24') which hold the in itself non-deflectable vehicle axle (6) fast in a transverse direction is so constructed that, as a function of the transverse force, and as the force increases, so the axle body (15) is transversely displaceable out of the central position and by a limited amount of about ± 0.8...1.2% of the vehicle width (b) and in that
– on the other hand, the longitudinal control rods (20) which are unyielding in their longitudinal direction and – when viewed in plan – which are so symmetrically inclined in relation to the longitudinal direction of the vehicle (centre line 25) and are therefore trapezoidally disposed, that, constituting a virtual pivoting centre (vertical axis 8), the point of intersection of the kinematically effective centre lines (21) of the longitudinal control rods (20) is by about 50...75% of the vehicle width (b) behind the centre of the in itself non-deflectable vehicle axle (6), in the direction of travel (9) (dimension A).

2. An omnibus according to Claim 1, characterised in that the limited transverse displaceability of the in itself non-deflectable vehicle axle (6) is accomplished by a limited capacity for the control rod(s) (24') concerned to telescope.

3. An omnibus according to Claim 2, characterised in that the telescopable control rod(s) (24') is structurally integrated with a piston/cylinder unit (piston 26, cylinder 27) which in turn serves as an hydraulic yawing brake.

4. An omnibus according to Claim 3, characterised in that the piston rod lead-through (cylinder cover 32) and the piston (26) of the piston/cylinder unit (piston 26, cylinder 27) are in each case constructed as rotationally symmetrical rubber/metal sleeves (rubber spring 30, 30') which bring about a functional fusion of a seal and of an elastic centring means of the piston/cylinder unit (piston 26, cylinder 27).

5. An omnibus according to one of Claims 1 to 4, characterised in that the control rods (24) which secure the vehicle axis (6) in a transverse direction and which – jointly with the longitudinal control arms (20) – prevent its rotation in or against the direction (22) of wheel rotation, are disposed in the manner of a – in plan view – triangularly arranged pair of wishbones and are articulatingly connected to one another at their mutually facing ends which are towards the axle body (15) via a swinging arm (33) and form a trapezoidal plane rectangular joint and in that the swinging arm (33) is connected to the axle body (15) by means of an articulation (34) disposed in its centre.

6. An omnibus according to Claim 5, characterised in that on the axle body (15) of the in itself non-deflectable vehicle axle (6) there is, cooperating with the end face of the associated control rod (24) of the pair of wishbones a stop buffer (35) which limits the transverse displacement travel.

7. An omnibus according to Claim 5 or 6, characterised in that the pivot bearings (articulation 34) on the swinging arm are constructed as rubber/metal bearings which provide for a resilient centring of the swinging arm (33) and with it also of the axle body (15) of the vehicle axle (6) which in itself is not deflectable.

8. An omnibus according to Claim 5, 6 or 7, characterised in that the swinging arm (33) is at least at one end extended beyond the control rod-end joint to where it is coupled to a hydraulic shock absorber which serves as a yawing brake (23).

9. An omnibus according to one of Claims 1 to 8, characterised in that there is associated with the vehicle wheels (7) on both sides of the in itself non-deflectable vehicle axle (6) and leading this latter a respective thrust roller (12) mounted on the axle body (15), these thrust rollers indeed projecting slightly outwardly beyond the associated vehicle wheels (7), their' mutual overall distance between centres being however markedly less, when measured over the width of the vehicle (b) than the clear gap (B) between the oppositely disposed track defining transverse guide webs (3) on the line side (clearance a).

**Revendications**

1. Autobus pouvant être guidé sur des pistes spéciales,
– comportant au moins un essieu (10) intrinsèquement non dirigeable, qui peut pivoter dans son ensemble autour d'un axe normal (8) situé au milieu du véhicule, orienté verticalement et décalé par rapport à la médiatrice de l'essieu du véhicule dans la direction longitudinale de ce dernier,
– en outre une paire de bras oscillants longitudinaux (20) orientés dans la direction longitudinale du véhicule et qui sont articulés, à droite et à gauche du milieu du véhicule, sur le corps de l'essieu intrinsèquement non dirigeable,
– en outre d'autres bras pivotants stabilisateurs (24), articulés sur le corps de l'essieu intrinsèquement non dirigeable, qui maintiennent l'essieu intrinsèquement non dirigeable en direction transversale et qui empêchent – en coopération avec les bras oscillants longitudinaux – une torsion de cet essieu de véhicule dans le sens de rotation des roues ou en sens inverse,
– en outre un frein d'oscillations en lacets, amortissant des oscillations en lacets de l'essieu intrinsèquement non dirigeable par rapport à la caisse du véhicule, caractérisé en ce que :
– l'essieu (6) de véhicule, qui peut certes pivoter mais qui est cependant non dirigeable, est laissé complètement libre en ce qui concerne un mouvement de pivotement, c'est-à-dire qu'il est pourvu de moyens de guidage sur voie n'agissant pas en fonction du tracé et qu'au contraire sa suspension est agencée de façon à être auto-directrice en fonction de forces transversales exercées dans une plage de pivotement d'environ ± 0,8...1,5 degrés angulaires par rapport à la position transversale exacte et de façon élasto-cinématique dans le sens opposé à la force transversale correspondante, par le fait que :
– d'une part l'articulation du ou des bras oscillants stabilisateurs (24, 24'), maintenant l'essieu intrinsèquement non dirigeable (6) du véhicule dans la direction transversale, est agencée de telle sorte que le corps d'essieu (15) soit déplaçable transversalement, en fonction d'une force transversale, d'une distance limitée à environ ± 0,8...1,2% de la largeur (b) du véhicule à partir de la position centrale et sous l'effet d'une augmentation de la force, et par le fait que :
– d'autre part les bras oscillants longitudinaux (20), indéformables dans leur direction longitudinale, sont inclinés – en les considérant en vue en plan – symétriquement par rapport à la direction longitudinale du véhicule (médiatrice 25), c'est-à-dire sont disposés en forme de trapèze de telle sorte que le point d'intersection, représentant un centre virtuel de pivotement (axe normal 8) des lignes centrales (21), agissant cinématiquement, des bras oscillants longitudinaux (20) soit situé, à environ 50...75% de la largeur (b) du véhicule, en considérant le sens de marche (9), en arrière du milieu de l'essieu intrinsèquement non dirigeable (6) du véhicule (côte A).

2. Autobus selon la revendication 1, caractérisé en ce que le degré limité de translation transversale de l'essieu intrinsèquement non dirigeable (6) du véhicule est établi par un degré limité de mouvement télescopique du ou des bras oscillants stabilisateurs correspondants (24').

3. Autobus selon la revendication 2, caractérisé en ce que le ou les bras oscillants stabilisateurs (24') déplaçables télescopiquement sont combinés unitairement avec un mécanisme à piston/cylindre (piston 26, cylindre 27), qui sert pour sa part de frein hydraulique d'oscillations en lacets.

4. Autobus selon la revendication 3, caractérisé en ce que l'élément de traversée de tige de piston (couvercle de cylindre 32) et le piston (26) du mécanisme à piston/cylindre (piston 26, cylindre 27) sont respectivement agencés comme des manchons en caoutchouc/métal à symétrie de révolution (ressort en caoutchouc 30, 30') et qui établissent une combinaison fonctionnelle d'un joint d'étanchéité et d'un moyen élastique de centrage du mécanisme à piston/cylindre (piston 26, cylindre 27).

5. Autobus selon une des revendications 1 à 4, caractérisé en ce que les bras oscillants stabilisateurs (24), maintenant l'essieu de véhicule (6) en direction transversale et empêchant – en coopération avec les bras oscillants longitudinaux (20) – une torsion dans le sens de rotation (22) des roues ou dans le sens inverse, sont disposés à la façon d'une paire de bras oscillants triangulaires, agencés en forme de triangle – en vue en plan –et sont reliés de façon articulée entre eux, à leurs extrémités dirigées l'un vers l'autre et vers le corps d'essieu (15), par l'intermédiaire d'un palonnier (33), en constituant un quadrilatère articulé plan en forme de trapèze, et en ce que le palonnier (33) est relié, par l'intermédiaire d'une articulation (34) disposée sur lui en son milieu, au corps d'essieu (15).

6. Autobus selon la revendication 5, caractérisé en ce qu'il est prévu sur le corps (15) de l'essieu intrinsèquement non dirigeable (6) du véhicule respectivement un tampon de butée (35), coopérant avec le côté frontal du bras oscillant stabilisateur associé (24) de la paire de bras triangulaires et qui limite la course de déplacement transversal.

7. Autobus selon la revendication 5 ou 6, caractérisé en ce que les paliers de pivotement (articulation 34) sont agencés sur le palonnier sous la forme de paliers en caoutchouc/métal, qui assurent élastiquement un centrage du palonnier (33) et, avec lui, également du corps (15) de l'essieu intrinsèquement non dirigeable (6) du véhicule.

8. Autobus selon la revendication 5, 6 ou 7, caractérisé en ce que le palonnier (33) est prolongé, au moins unilatéralement, au-delà de l'articulation située du côté du bras oscillant stabilisateur et est accouplé en cet endroit avec un amortisseur hydraulique servant de frein (23) d'oscillations en lacets.

9. Autobus selon une des revendications 1 à 8, caractérisé en ce qu'aux roues (7) situées des deux côtés du véhicule dans l'essieu intrinsèquement non dirigeable (6) est associé un rouleau respectif de retenue (12), disposé en avant et monté sur le corps d'essieu (15), ces rouleaux (12) débordant certes chacun des roues correspondantes (7) vers l'extérieur mais leur espacement-hors-tout, mesuré sur la largeur (b) du véhicule, étant nettement plus petit que l'espacement intérieur (B) des glissières (3) de guidage transversal, situées dans des positions mutuellement opposées et définissant la voie en fonction du tracé de la piste (espacement libre a).

## Fig.1

# Fig.2

Fig.3

Fig.4

Fig.5